# EUROPÄISCHE PATENTSCHRIFT

(11) **EP 1 262 746 B1**
(45) Veröffentlichungstag und Bekanntmachung des Hinweises auf die Patenterteilung: **28.09.2005**
(21) Anmeldenummer: 02011336.1
(22) Anmeldetag: 23.05.2002
(51) Int. Cl.: G01G 21/23, G01G 21/18

(54) **Elektronische Waage mit mindestens drei Wägezellen**
Electronic balance with at least three force sensors
Balance électronique avec au moins trois capteurs de forces

(30) Priorität: 01.06.2001 DE 10126661
(43) Veröffentlichungstag der Anmeldung: 04.12.2002
(73) Patentinhaber: SARTORIUS AG, 37075 Göttingen (DE)
(72) Erfinder: Müller, Michael, 37079 Göttingen (DE); Von Steuben, Jan, 37081 Göttingen (DE); Wald, Michael, 31137 Hildesheim (DE)

(56) Entgegenhaltungen:
- DE-C- 895 065
- GB-A- 581 929
- US-A- 4 411 327
- US-A- 4 554 987

## Beschreibung

Die Erfindung bezieht sich auf eine elektronische Waage mit mindestens drei Wägezellen, mit einer Lastschale, mit Übertragungselementen, die die auf die Lastschale einwirkende vertikale Belastung auf die Wägezellen weiterleiten und die gegenüber vertikalen Kräften steif ausgebildet sind, und mit Elementen zur seitlichen Fesselung der Lastschale.

Waagen dieser Art sind allgemein bekannt. Die Übertragungselemente, die die auf die Lastschale einwirkende vertikale Belastung auf die Wägezellen weiterleiten, und die Elemente zur seitlichen Fesselung der Lastschale müssen dabei so aufeinander abgestimmt sein, dass sie nicht nur die auf die Lastschale einwirkende Belastung unverfälscht an die Wägezellen weiterleiten und horizontale Kräfte auf die Lastschale an das Gehäuse/Grundgestell der Waage ableiten, sie müssen vielmehr auch dafür sorgen, dass eine verschiedene thermische Ausdehnung zwischen der Lastschale einerseits und dem Gehäuse/Grundgestell der Waage andererseits ausgeglichen wird und nicht zu Wägefehlern oder einer Beschädigung der Wägezellen führt. Dies ist besonders bei großen Lastschalen (≥ 1 m) und bei Lastschalen, die thermisch nicht gut mit dem Gehäuse/Grundgestell gekoppelt sind, wichtig.

Zur Lösung dieser Aufgabe ist es beispielsweise aus der US-A-4 554 987 bekannt, als Übertragungselemente, die die auf die Lastschale einwirkende vertikale Belastung auf die Wägezelle weiterleiten, sogenannte Pendelstützen zu benutzen, wobei auch die Wägezelle selbst als Pendelstütze ausgebildet sein kann (z. B. EP 0315 846 B1). Die Pendelstützen weisen dabei auf ihrer Oberseite und auf ihrer Unterseite ballige Flächen auf, die so dimensioniert sind, dass sich bei einem seitlichen Kippen der Pendelstütze die Lastschale etwas hebt und dadurch eine rücktreibende Kraft erzeugt wird. Dadurch wirken die Pendelstützen selbstzentrierend und es müssen nur für große seitliche Kräfte seitliche, gehäusefeste Anschläge vorhanden sein, die den seitlichen Weg der Lastschale begrenzen, die die Lastschale im normalen Betrieb aber nicht berühren. - Bei dynamischen Waagen führt aber die Übergabe des Wägegutes auf die Lastschale zwangsläufig zur Anregung dieser Pendelschwingungen, so dass vertikale Störbeschleunigungen auf das Wägegut wirken und die Wägung stören. Falls die Lastschale bei der Übergabe des Wägegutes sogar den gehäusefesten Anschlag berührt, führt dies natürlich zu einer zusätzlichen Störung der Wägung.

In der US-A-4 554 987 wird auch eine Bauform mit einer Stahlkugel zwischen einer oberen Kugelkalotte und einer unteren Kugelkalotte beschrieben, wobei der Durchmesser der Kugelkalotte größer ist als der Durchmesser der Stahlkugel. Dadurch wird auch hier die Lastschale bei seitlicher Bewegung etwas angehoben, und es ergibt sich eine selbstzentrierende Wirkung. Für große seitliche Kräfte sind wieder seitliche, gehäusefeste Anschläge vorhanden.

Eine ähnliche Bauweise mit einer Stahlkugel zwischen zwei Kugelkalotten ist auch aus der US-A-4 411 327 bekannt. Durch ein übergestülptes Gummischlauchstück, das die obere Kugelkalotte mit der unteren Kugelkalotte verbindet, wird die Zentrierwirkung verstärkt und eine gewisse Dämpfung erreicht. Für große seitliche Kräfte sind wieder seitliche, gehäusefeste Anschläge vorhanden.

Die geschilderten Nachteile bei dynamischen Waagen gelten für alle Bauformen in gleicher Weise, da in allen Fällen seitliche Bewegungen der Lastschale zu vertikalen Störbescbleunigungen führen und das Berühren der gehäusefesten Anschläge das Wägeergebnis zusätzlich verfälscht.

Weiter ist es aus dem DE-295 21 150 U1 bekannt, bei einer Fahrzeug-Wägevorrichtung zwischen dem Fahrzeug-Chassis und dem Lastaufbau mindestens einen horizontalen Lenker einzubauen, um eine horizontale Fesselung des Lastaufbaus gegenüber dem Fahrzeug-Chassis zu erreichen. Übertragen auf eine ortsfeste Waage entspricht dies einem horizontalen Lenker zwischen Lastschale und Gehäuse/Grundgestell. Dieser Lenker stellt aber einen Kraftnebenschluss zu den Wägezellen dar, sodass z. B. Reibung in den Gelenken des Lenkers oder nicht genau horizontale Ausrichtung zu Messfehlern führt.

Eine Waage ähnlicher Bauart ist aus der DE 37 15 572 A1 bekannt. Hier bestehen die Übertragungselemente, die die auf die Lastschale einwirkende vertikale Belastung auf die Wägezellen weiterleiten, jeweils aus einem Metall-Elastomer-Verbundelement, das mit dem Krafteinleitungsteil der zugehörigen Wägezelle verschraubt ist. Diese Metall-Elastomer-Verbundelemente gleichen die Ausdehnungsunterschiede elastisch aus und ergeben zusätzlich eine gute Stoßdämpfung bei stoßartiger Belastung der Waagschale sowohl in horizontaler als auch in vertikaler Richtung. Durch ihre federnde Nachgiebigkeit führen sie jedoch auch bei statischer Belastung innerhalb des Nennwägebereiches zu einer deutlichen Absenkung der Lastschale (über die unvermeidbare Absenkung der Wägezellen unter Last hinaus). Diese Absenkung ist z. B. dann besonders ungünstig, wenn die Lastschale eine Rollenbahn oder ein Transportband trägt und das Wägegut auf der einen Seite zugeführt und auf der anderen Seite abgeführt wird und in der Zwischenzeit während der Bewegung gewogen werden soll (sogenannte dynamische Waagen). Bei der Übergabe des Wägegutes vom zuführenden Transportband führt die einseitige Belastung zu einem einseitigen Abkippen der Lastschale; bewegt sich das Wägegut bis zur Mitte der Lastschale, so stellt sich die Lastschale horizontal, um schließlich kurz vor der Übergabe des Wägegutes an das weiterführende Transportband nach der anderen Seite hin abzukippen. Dadurch bewegt sich das Wägegut auch bei genau ebener und horizontal ausgerichteter Lastschale nicht horizontal, sondern auf einer etwa parabelförmigen Bahn, sodass geschwindigkeitsabhängige vertikale Beschleunigungskomponenten auf das Wägegut einwirken und die Wägung verfälschen.

Aufgabe der Erfindung ist es daher, zu verhindern, dass die Elemente zur seitlichen Fesselung der Lastschale das Wägeergebnis verfälschen und dass die Lastschale unter seitlichen Kräften zu stark nachgeben kann.

Erfindungsgemäß wird dies dadurch erreicht, dass die Übertragungselemente so ausgebildet sind, dass sie die Lastschale bei einer seitlichen Bewegung in einer horizontalen Ebene führen, und dass die Elemente zur seitlichen Fesselung der Lastschale am Krafteinleitungsteil von mindestens einer Wägezelle abgestützt sind.

Durch die Abstützung der Elemente zur seitlichen Fesselung der Lastschale am Krafteinleitungsteil mindestens einer Wägezelle - also nicht direkt am Gehäuse/Grundgestell - stellen diese keinen fehlerverursachenden Kraftnebenschluss dar. Horizontale Lenker zur Fesselung können also einfach aufgebaut sein, da Reibung oder Hysterese in den Gelenken der Lenker zu keinen Wägefehlern führen. Seitliche Anschläge zur Fesselung können sehr eng eingestellt werden, da ein Berühren des Anschlages ebenfalls zu keinen Wägefehlern führt. Dadurch, dass die Übertragungselemente nur eine exakt horizontale Bewegung der Lastschale erlauben, wird auch bei einer seitlichen Auslenkung der Lastschale eine vertikale Bewegungskomponente vermieden, sodass keine dynamischen Wägefehler auftreten. Vorteilhafte Ausgestaltungen ergeben sich aus den abhängigen Ansprüchen.

Die Erfindung wird im Folgenden anhand der schematischen Figuren beschrieben. Dabei zeigt:
- Figur 1: eine erste Ausgestaltung der Waage in Seitenansicht,
- Figur 2: die Waage aus Figur 1 in Aufsicht,
- Figur 3: das Übertragungselement der Waage aus Figur 1 und 2 alleine vergrößert im Schnitt,
- Figur 4: ein Detail der Waage aus Figur 1,
- Figur 5: ein Detail der Waage in einer zweiten Ausgestaltung,
- Figur 6: eine dritte Ausgestaltung der Waage in Seitenansicht,
- Figur 7: die Waage aus Figur 6 in Aufsicht,
- Figur 8: eine vierte Ausgestaltung der Waage in Seitenansicht und
- Figur 9: die Waage aus Figur 8 in Aufsicht.

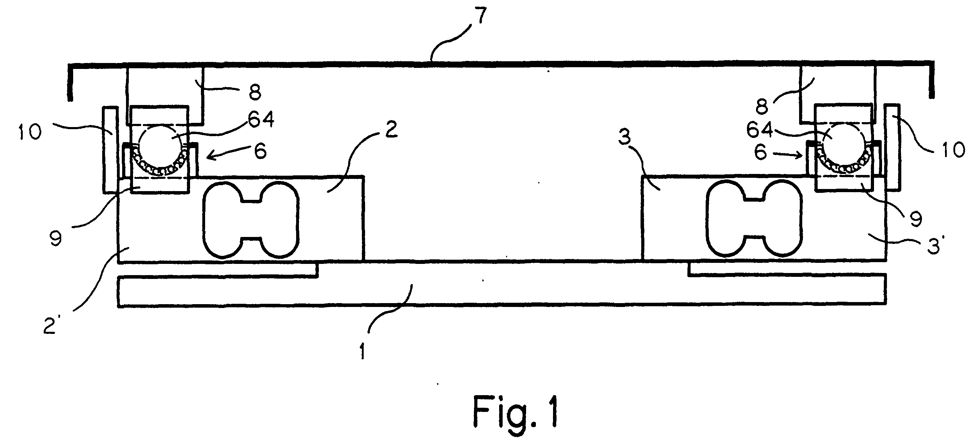

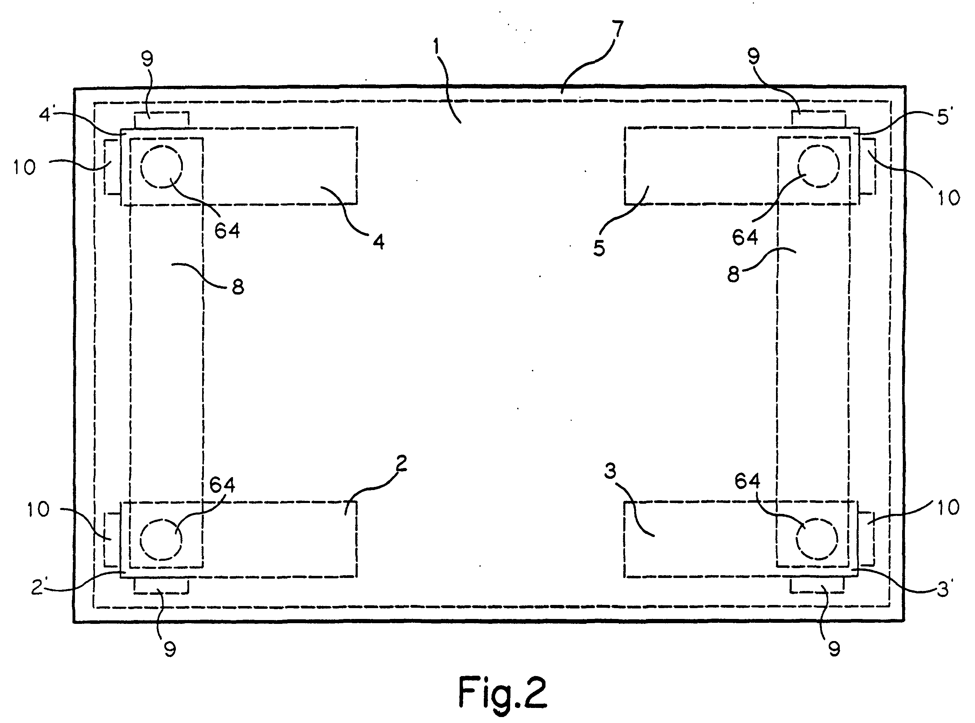

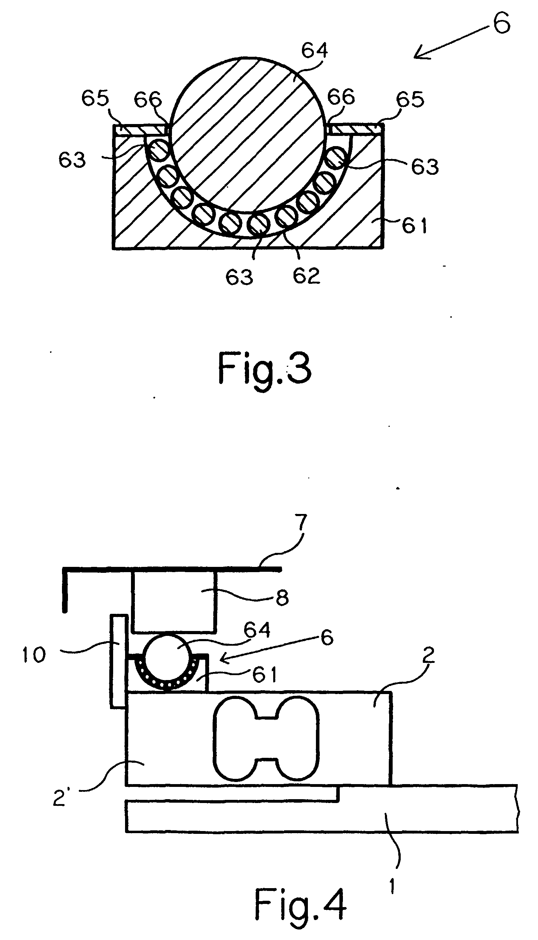

In den Figuren 1 und 2 ist eine erste Ausgestaltung der Waage gezeigt; Figur 1 ist eine Seitenansicht, Figur 2 eine Aufsicht. Das Gehäuse bzw. das Grundgestell 1 der Waage ist nur angedeutet. Die vier Wägezellen sind mit 2, 3, 4 und 5 bezeichnet. Wägezellen sind in verschiedenen Bauarten allgemein bekannt und müssen daher in ihren Einzelheiten und ihrer Funktionsweise nicht näher erläutert werden. Auf den Krafteinleitungsteilen 2', 3', 4' und 5' der Wägezellen stützt sich über Übertragungselemente 6 eine Lastschale 7 ab. Ein Übertragungselement 6 ist in Figur 3 noch mal allein vergrößert und im vertikalen Schnitt dargestellt, in Figur 4 ist die Wägezelle 2 mit Übertragungselement 6 und Lastschale 7 noch mal als Vergrößerung aus Figur 1 dargestellt, wobei jedoch der Übersichtlichkeit halber der vordere Anschlag weggelassen worden ist.

Das Übertragungselement 6 besteht aus einem Metallblock 61, aus dem eine Kugelkalotte 62 herausgearbeitet ist. In dieser Kugelkalotte liegen kleinere Kugeln 63, ggf. durch nicht dargestellte Haltemittel (z. B. Kugelkäfig) untereinander gehalten. Auf den kleineren Kugeln 63 stützt sich eine größere Kugel 64 ab. Die Größe der Kugeln 63 und 64 und der Kugelkalotte 62 ist dabei so gewählt, dass die Summe aus dem Radius der großen Kugel 64 und dem Durchmesser der kleinen Kugeln 63 gerade gleich dem Radius der Kugelkalotte 62 ist. Dadurch stützt sich die große Kugel 64 auf allen kleinen Kugeln 63 ab und diese wiederum auf der Kugelkalotte 62. Die große Kugel 64 ist also in allen Richtungen frei drehbar im Block 61 mit der Kugelkalotte 62 gelagert. Als Fixierung und Abhebesicherung ist ein Blech 65 mit zentrischem Loch 66 auf dem Metallblock 61 befestigt.

Wie vor allem aus Figur 4 erkennbar, ist der Metallblock 61 des Übertragungselementes 6 am Krafteinleitungsteil 2' der Wägezelle 2 befestigt. Auf der großen Kugel 64 des Übertragungselementes 6 stützt sich dann eine Druckplatte 8 ab, die fest mit der Unterseite der Lastschale 7 verbunden ist. Weiter stützt sich die Druckplatte 8 über ein Übertragungselement 6 auf dem Krafteinleitungsteil 4' der Wägezelle 4 ab; eine zweite Druckplatte 8 stützt sich in gleicher Weise über zwei Übertragungselemente 6 auf den Krafteinleitungsteilen 3' und 5' der weiteren Wägezellen 3 und 5 ab (siehe Figur 2). Dadurch werden vertikale Kräfte ohne eine merkliche Nachgiebigkeit von der Lastschale auf die Wägezellen übertragen. Gegenüber seitlichen Kräften jedoch ist die Lastschale durch die Übertragungselemente 6 frei beweglich, wobei die Bewegung exakt horizontal erfolgt. Die seitliche Bewegung der Lastschale wird erst durch die seitlichen Anschläge 10 - in der Richtung links/rechts in Figur 1, 2 und 4 - bzw. durch die Anschläge 9 in der Richtung oben/unten in der Darstellungsweise von Figur 2 - begrenzt. Die Anschläge 9 und 10 sind jeweils am Krafteinleitungsteil der Wägezelle befestigt. Ein Anliegen der Druckplatte 8 an einem oder mehreren der Anschläge 9 und 10 führt also zu keinem Kraftnebenschluss zwischen Lastschale 7 und Gehäuse/Grundgestell 1 und verfälscht das Wägeergebnis daher nicht. Die Anschläge 9 und 10 können also sehr eng eingestellt werden (enger also als in den Figuren der Deutlichkeit halber gezeichnet), ohne dass Wägefehler auftreten.

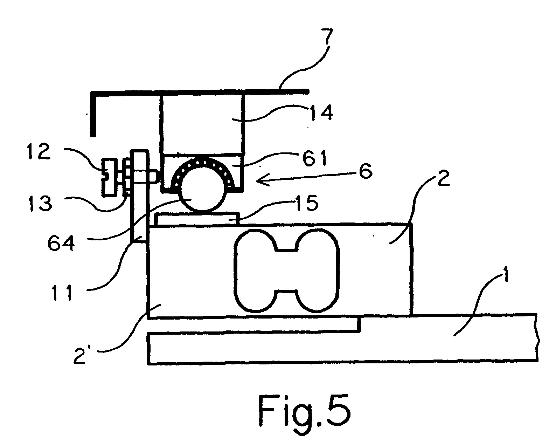

In Figur 5 ist gezeigt, dass das Übertragungselement 6 auch anders herum eingebaut werden kann: Der Metallblock 61 mit der Kugelkalotte ist über ein Zwischenstück 14 an der Unterseite der Lastschale 7 befestigt; die große Kugel 64 stützt sich auf einer Druckplatte 15 ab, die am Krafteinleitungsteil 2' der Wägezelle 2 befestigt ist. Außerdem ist in Figur 5 gezeigt, wie eine Justiermöglichkeit für den Abstand des seitlichen Anschlages aufgebaut sein kann: In einer am Krafteinleitungsteil 2' der Wägezelle 2 befestigten Platte 11 steckt in einer Gewindebohrung eine Schraube 12, deren vorderes Ende den eigentlichen Anschlag bildet. Nach der Einstellung des gewünschten seitlichen Abstandes wird die Lage der Schraube 12 durch eine Kontermutter 13 fixiert.

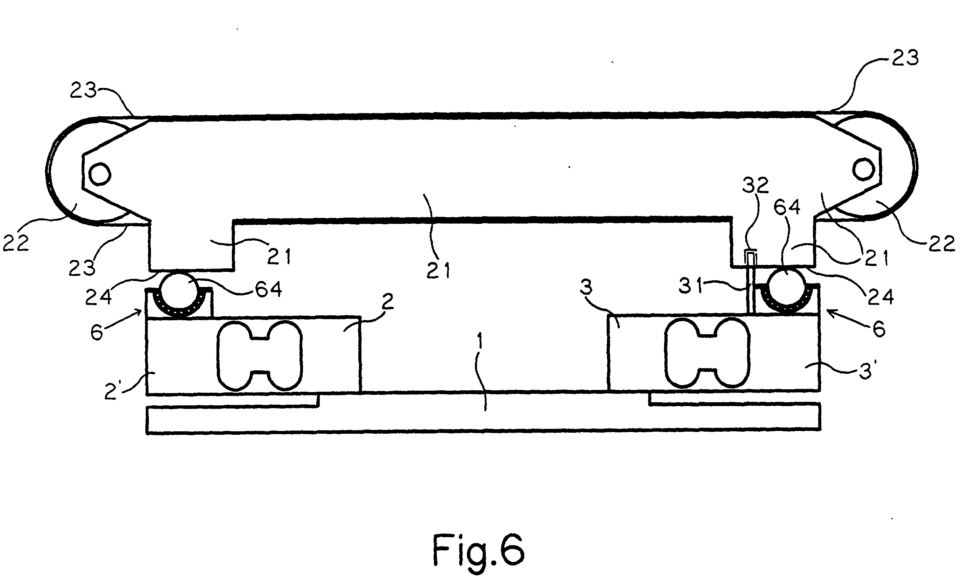

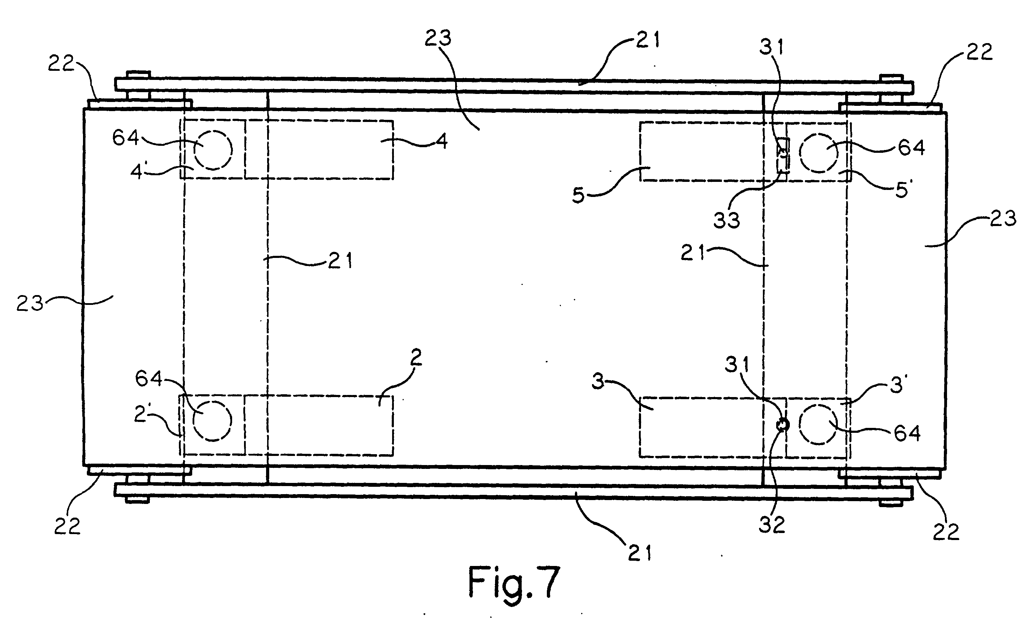

In den Figuren 6 und 7 ist eine dritte Ausgestaltung der Waage gezeigt, Figur 6 ist eine Seitenansicht, Figur 7 eine Aufsicht. In dieser Ausgestaltung ist statt der Lastschale ein Förderband vorgesehen. Es besteht aus einem Tragteil 21, in dem links und rechts je eine Rolle 22 drehbar gelagert ist. Über die beiden Rollen läuft ein Endlos-Förderband 23. Der Antrieb der Rollen 22 ist der Übersichtlichkeit halber nicht eingezeichnet. Das ganze Förderband stützt sich mit der horizontalen Unterseite 24 des Tragteiles 21 auf den großen Kugeln 64 der schon beschriebenen Übertragungselemente 6 und damit auf den Krafteinleitungsteilen 2', 3', 4' und 5' der Wägezellen 2,3,4 und 5 ab. - Auch die seitlichen Anschläge sind in dieser Ausgestaltung anders realisiert: Am Krafteinleitungsteil 3' der Wägezelle 3 ist ein vertikaler Stift 31 befestigt, der in eine Bohrung 32 im Tragteil 21 hineinragt. Die Bohrung 32 ist nur geringfügig größer als der Stift 31, sodass Stift und Bohrung als enge Anschläge wirken. Diese Kombination Stift 31/Bohrung 32 ist nur bei der Wägezelle 3 vorgesehen. Der Krafteinleitungsteil 5' der Wägezelle 5 trägt ebenfalls einen vertikalen Stift 31; im Tragteil 21 ist an dieser Stelle jedoch ein Langloch 33. Dadurch wirkt diese Kombination Stift 31/Langloch 33 als Verdrehsicherung für das Förderband, eine unterschiedliche Wärmeausdehnung der Grundplatte 1 und des Tragteils 21 zwischen den Wägezellen 3 und 5 wird jedoch toleriert. An den Wägezellen 2 und 4 sind gar keine Anschläge vorgesehen, sodass auch verschiedene Wärmeausdehnung zwischen den Wägezellen 3 und 5 einerseits und den Wägezellen 2 und 4 andererseits toleriert wird.

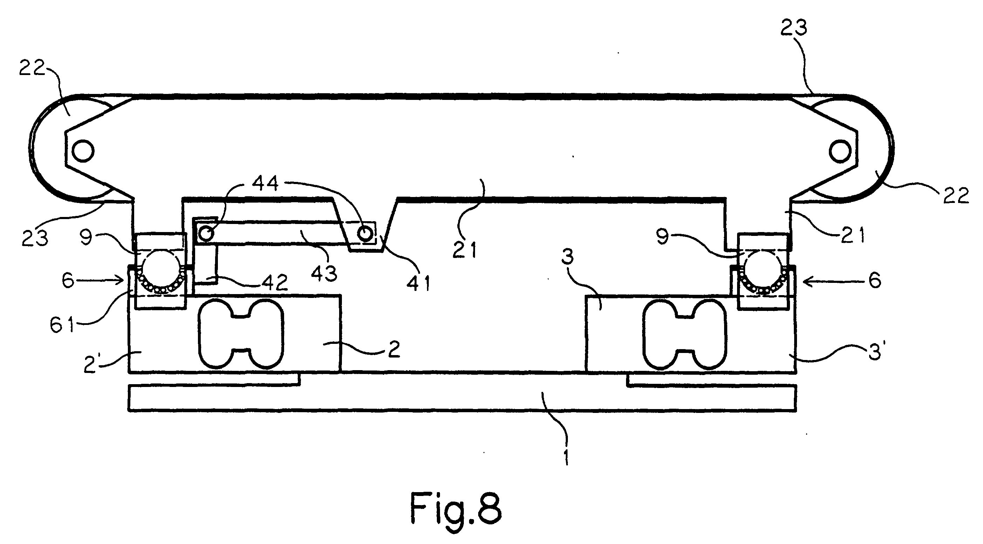

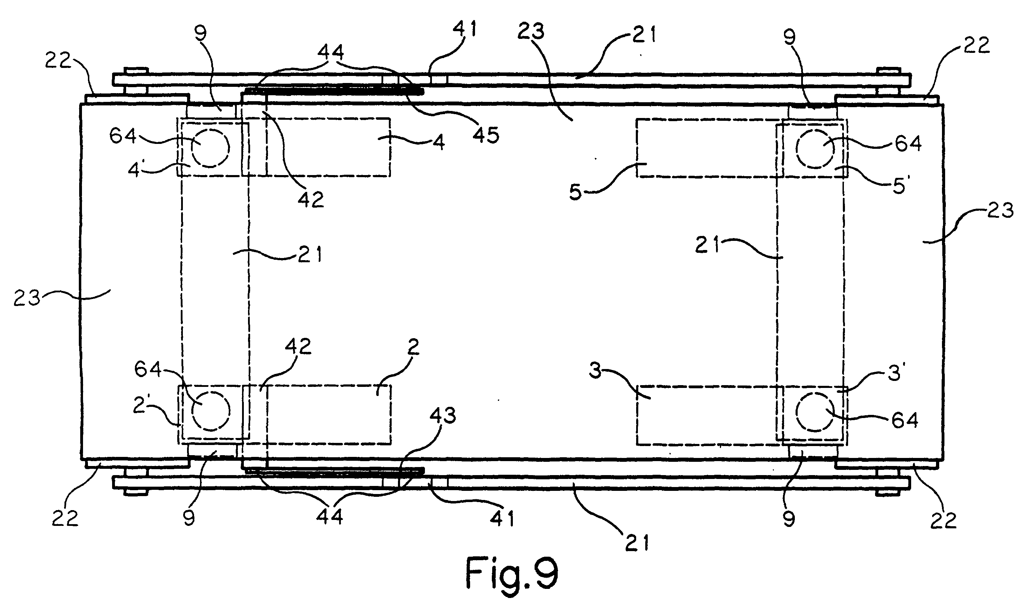

In den Figuren 8 und 9 ist als weitere Alternative für die seitliche Fesselung der Einbau von waagerechten Lenkern gezeigt. Figur 8 ist eine Seitenansicht, Figur 9 ist eine Aufsicht. Ein Lenker 43 verbindet einen Vorsprung 41 am Tragteil 21 des Förderbandes mit einem vorspringendem Teil 42, das am Metallblock 61 des Übertragungselementes 6 und damit am Krafteinleitungsteil 2' der Wägezelle 2 befestigt ist. Die Gelenke an den Enden des Lenkers 43 sind mit 44 angedeutet. Sie können sehr einfach gehalten sein, da z. B. Reibung nicht stört, da sie sich ja auf dem Krafteinleitungsteil der Wägezelle abstützen. Der zweite Lenker 45 ist nur in der Aufsicht in Figur 9 erkennbar, er verbindet das Förderband mit dem Krafteinleitungsteil 4' der Wägezelle 4. Die beiden Lenker 43 und 45 sind seitlich (in der Richtung oben/unten in der Darstellungsweise der Figur 9) nachgiebig ausgebildet, sodass eine verschiedene thermische Ausdehnung in dieser Richtung nicht behindert wird. In dieser Richtung sind Anschläge 9 vorgesehen, die an den Krafteinleitungsteilen 2'....5' der Wägezellen 2...5 befestigt sind. Zu den Wägezellen 3 und 5 hin sind keine Lenker vorgesehen, sodass in der Richtung links/rechts in Figur 8 und 9 die thermische Ausdehnung ebenfalls nicht behindert wird. - Durch die Lenker 43 und 45 werden also Kräfte in Bewegungsrichtung des Förderbandes - und damit die am häufigsten auftretenden horizontalen Kräfte - aufgenommen, während die horizontalen Kräfte in Querrichtung wie in den anderen Ausgestaltungen durch Anschläge abgefangen werden.

Die erfindungsgemäß vorgesehene Abstützung der Anschläge bzw. der Lenker, also der Elemente zur seitlichen Fesselung der Lastschale, am Krafteinleitungsteil einer oder mehrerer Wägezellen erfordert natürlich eine so robuste Konstruktion der Wägezellen, dass sie die dabei auftretenden Kräfte aufnehmen können und zum Gehäuse bzw. zum Grundgestell ableiten können.

In allen gezeichneten Ausgestaltungen sind die Wägezellen jeweils so am Gehäuse/Grundgestell 1 befestigt, dass dieser Befestigungspunkt näher am Mittelpunkt der Waage liegt und der Krafteinleitungsteil weiter vom Mittelpunkt der Waage entfernt ist. Dadurch wird eine Unterstützung der Lastschale bzw. des Förderbandes möglichst weit am Rand erreicht, sodass auch bei Kantenbelastung im Allgemeinen ein Abheben der Lastschale bzw. des Förderbandes vermieden wird, eine Abhebesicherung also entbehrlich ist.

Die in den Figuren gezeigten verschiedenen Ausführungen der Elemente zur seitlichen Fesselung der Lastschale und die beiden Einbauvarianten des Übertragungselementes 6 können selbstverständlich beliebig miteinander kombiniert werden und sowohl für Waagen mit Standardwaagschale (wie Figur 1 bis 5) als auch für Waagen mit Förderband (wie Figur 6 bis 9) eingesetzt werden.

## Patentansprüche

1. Elektronische Waage mit mindestens drei Wägezellen (2,3,4,5), mit einer Lastschale (7, 21/22/23), mit Übertragungselementen (6), die die auf die Lastschale einwirkende vertikale Belastung auf die Wägezellen weiterleiten und die gegenüber vertikalen Kräften steif ausgebildet sind, und mit Elementen (9, 10, 11/12/13, 31, 43, 45) zur seitlichen Fesselung der Lastschale, **dadurch gekennzeichnet, dass** die Übertragungselemente (6) so ausgebildet sind, dass sie die Lastschale (7,21/22/23)bei einer seitlichen Bewegung in einer horizontalen Ebene führen, und dass die Elemente (9, 10, 11/12/13, 31, 43, 45) zur seitlichen Fesselung der Lastschale am Krafteinleitungsteil (2', 3', 4', 5') von mindestens einer Wägezelle (2, 3, 4, 5)abgestützt sind.

2. Elektronische Waage nach Anspruch 1, **dadurch gekennzeichnet, dass** die Übertragungselemente (6) jeweils aus einer größeren Kugel (64), die über mindestens drei kleinere Kugeln (63) in einer Kugel-Hohlkalotte (62/63) allseitig drehbar gelagert ist, bestehen, dass die Kugel-Hohlkalotten jeweils am Krafteinleitungsteil (2', 3', 4', 5') der Wägezellen (2, 3, 4, 5) befestigt sind und dass die Lastschale (7,21/22/23) sich über mindestens eine ebene, horizontale Druckplatte (8) auf den größeren Kugeln (64) abstützt.

3. Elektronische Waage nach Anspruch 1, **dadurch gekennzeichnet, dass** die Übertragungselemente (6) jeweils aus einer größeren Kugel (64), die über mindestens drei kleinere Kugeln (63) in einer Kugel-Hohlkalotte (62/63) allseitig drehbar gelagert ist, bestehen, dass die Kugel-Hohlkalotten (62/63) an der Unterseite der Lastschale (7, 21/22/23) befestigt sind und dass die größere Kugeln (64) sich auf je einer ebenen, horizontalen, mit dem Krafteinleitungsteil (2', 3', 4', 5') der jeweiligen Wägezelle (2, 3, 4, 5) verbundenen Druckplatte (15) abstützt.

4. Elektronische Waage nach einem der Ansprüche 1 bis 3, **dadurch gekennzeichnet, dass** die Elemente zur seitlichen Fesselung der Lastschale aus seitlichen Anschlägen (9, 10, 11/12/13, 31) bestehen.

5. Elektronische Waage nach Anspruch 4, **dadurch gekennzeichnet, dass** die seitlichen Anschläge (11/12/13) justierbar sind.

6. Elektronische Waage nach einem der Ansprüche 1 bis 3, **dadurch gekennzeichnet, dass** die Elemente zur seitlichen Fesselung der Lastschale aus horizontalen Lenkern (43, 45) bestehen.

7. Elektronische Waage nach einem der Ansprüche 1 bis 6, **dadurch gekennzeichnet, dass** als Lastschale eine Rollenbahn oder ein Transportband (21/22/23) eingebaut ist.

8. Elektronische Waage nach Anspruch 6 und 7, **dadurch gekennzeichnet, dass** die Richtung der horizontalen Lenker (43, 45) mit der Transportrichtung der Rollenbahn oder des Transportbandes (21/22/23) übereinstimmt.

9. Elektronische Waage nach einem der Ansprüche 1 bis 8, **dadurch gekennzeichnet, dass** die Wägezellen (2, 3, 4, 5) Wägezellen mit vorkragendem Krafteinleitungsteil (2', 3', 4', 5') sind.

10. Elektronische Waage nach Anspruch 9, **dadurch gekennzeichnet, dass** die Wägezellen (2, 3, 4, 5) so im Gehäuse/Grundgestell (1) der Waage eingebaut sind, dass das vorkragende Krafteinleitungsteil (2', 3', 4', 5') der Wägezelle (2, 3, 4, 5) jeweils weiter vom Mittelpunkt der Waage entfernt ist als der Befestigungspunkt der Wägezelle am Gehäuse/Grundgestell (1).

## Revendications

1. Balance électronique avec au moins trois cellules de pesée (2, 3, 4, 5), avec un plateau (7, 21/22/23), avec des éléments de transmission (6) qui transmettent sur les cellules de pesée la charge verticale agissant sur le plateau et qui sont configurés de manière rigide par rapport aux efforts verticaux et avec des éléments (9, 10, 11/12/13, 31, 43, 45) pour entraver latéralement le plateau, **caractérisée en ce que** les éléments de transmission (6) sont configurés de telle façon que lors d'un mouvement latéral ils guident le plateau (7, 21/22/23) sur un plan horizontal et **en ce que** les éléments (9, 10, 11/12/13, 31, 43, 45) pour entraver latéralement le plateau sont appuyés sur la pièce d'introduction des efforts (2', 3', 4', 5') d'au moins une cellule de pesée (2, 3, 4, 5).

2. Balance électronique selon la revendication 1, **caractérisée en ce que** les éléments de transmission (6) se composent respectivement d'une boule plus grande (64) qui est logée de manière mobile dans tous les sens dans une calotte creuse de réception de la boule (62/63) par l'intermédiaire d'au moins trois boules plus petites (63), **en ce que** les calottes creuses de réception des boules sont respectivement fixées à la pièce d'introduction des efforts (2', 3', 4', 5') des cellules de pesée (2, 3, 4, 5) et **en ce que** le plateau (7, 21/22/23) s'appuie sur les boules plus grandes (64) par l'intermédiaire d'au moins une plaque d'appui plane et horizontale (8).

3. Balance électronique selon la revendication 1, **caractérisée en ce que** les éléments de transmission (6) se composent respectivement d'une boule plus grande (64) qui est logée de manière mobile dans tous les sens dans une calotte creuse de réception de la boule (62/63) par l'intermédiaire d'au moins trois boules plus petites (63), **en ce que** les calottes creuses de réception des boules (62/63) sont fixées à la partie inférieure du plateau (7, 21/22/23) et **en ce que** les boules plus grandes (64) s'appuient sur respectivement une plaque d'appui (15) plane, horizontale et reliée avec la pièce d'introduction des efforts (2', 3', 4', 5') de la cellule de pesée respective (2, 3, 4, 5).

4. Balance électronique selon l'une quelconque des revendications 1 à 3, **caractérisée en ce que** les éléments pour entraver latéralement le plateau se composent de butées latérales (9, 10, 11/12/13, 31).

5. Balance électronique selon la revendication 4, **caractérisée en ce que** les butées latérales (11/12/13) sont ajustables.

6. Balance électronique selon l'une quelconque des revendications 1 à 3, **caractérisée en ce que** les éléments pour entraver latéralement le plateau se composent de guides horizontaux (43, 45).

7. Balance électronique selon l'une quelconque des revendications 1 à 6, **caractérisée en ce qu'**un transporteur à rouleaux ou une bande de transport (21/22/23) est mis(e) en place en tant que plateau.

8. Balance électronique selon les revendications 6 et 7, **caractérisée en ce que** la direction des guides horizontaux (43, 45) est en concordance avec la direction de transport du transporteur à rouleaux ou de la bande de transport (21/22/23).

9. Balance électronique selon l'une quelconque des revendications 1 à 8, **caractérisée en ce que** les cellules de pesée (2, 3, 4, 5) sont des cellules de pesée avec une pièce d'introduction des efforts disposée en saillie (2', 3', 4', 5').

10. Balance électronique selon la revendication 9, **caractérisée en ce que** les cellules de pesée (2, 3, 4, 5) sont montées de telle façon dans le boîtier ou dans le bâti de base (1) de la balance que la pièce d'introduction des efforts disposée en saillie (2', 3', 4', 5') de la cellule de pesée (2, 3, 4, 5) soit respectivement plus éloignée du point central de la balance que le point de fixation de la cellule de pesée sur le boîtier ou sur le bâti de base (1).

## Claims

1. Electronic scales with at least three weighing cells (2, 3, 4, 5), with a scalepan (7, 21/22/23), transfer elements (6) which pass on to the weighing cells the vertical load acting on the scalepan and which are constructed to be stiff relative to vertical forces, and elements (9, 10, 11/12/13, 31, 43, 45) for lateral shackling of the scalepan, **characterised in that** the transfer elements (6) are so constructed that they guide the scalepan (7, 21/22/23) in a horizontal plane in the case of lateral movement and that the elements (9, 10, 11/12/13, 31, 43, 45) for lateral shackling of the scalepan are supported at the load introducing part (2', 3' 4', 5') by at least one weighing cell (2, 3, 4, 5).

2. Electronic scales according to claim 1, **characterised in that** the transfer elements (6) each consist of a larger ball (64) which is rotatably mounted at all sides by way of at least three smaller balls (63) in a ball cavity guide (62/63), that the ball cavity guides are each fastened to the force introducing part (2', 3', 4', 5') of the weighing cells (2, 3, 4, 5) and that the scalepan (7, 21/22/23) is supported on the larger balls (64) by way of at least one planar, horizontal pressure plate (8).

3. Electronic scales according to claim 1, **characterised in that** the transfer elements (6) each consist of a larger ball (64) which is rotatably mounted at all sides by way of at least three smaller balls (63) in a ball cavity guide (62/63), that the ball cavity guides (62/63) are fastened to the underside of the scalepan (7, 21/22/23) and that the larger balls (64) are each supported on a respective planar, horizontal pressure plate (15) connected with the force introducing part (2', 3', 4', 5') of the respective weighing cell (2, 3, 4,5).

4. Electronic scales according to one of claims 1 to 3, **characterised in that** the elements for lateral shackling of the scalepan consist of lateral abutments (9, 10, 11/12/13, 31).

5. Electronic scales according to claim 4, **characterised in that** the lateral abutments (11/12/13) are adjustable.

6. Electronic scales according to one of claims 1 to 3, **characterised in that** the elements for lateral shackling of the scalepan consist of horizontal guide arms (43, 45).

7. Electronic scales according to one of claims 1 to 6, **characterised in that** a roller path or a transport belt (21/22/23) is installed as scalepan.

8. Electronic scales according to claim 6 and 7, **characterised in that** the direction of the horizontal guide arms (43, 45) corresponds with the transport direction of the roller path or of the transport belt (21/22/23).

9. Electronic scales according to one of claims 1 to 8, **characterised in that** the weighing cells (2, 3, 4, 5) are weighing cells with overhanging force introducing part (2', 3', 4', 5').

10. Electronic scales according to claim 9, **characterised in that** the weighing cells (2, 3, 4, 5) are so incorporated in the housing / base frame (1) of the scales that each overhanging force introducing part (2', 3', 4', 5') of the weighing cell (2, 3, 4, 5) is spaced further from the centre point of the scales than the fastening point of the weighing cell at the housing / base frame (1).
